# EUROPEAN PATENT SPECIFICATION

(11) **EP 3 507 500 B1**
(45) Date of publication and mention of the grant of the patent: **05.06.2024**
(21) Application number: 17762176.0
(22) Date of filing: 30.08.2017
(51) Int. Cl.: F04D 19/04, F04D 25/06, H02K 1/27

(54) **VACUUM PUMP ASSEMBLY**
VAKUUMPUMPE
POMPE À VIDE

(30) Priority: 05.09.2016 GB 201615048
(43) Date of publication of application: 10.07.2019
(73) Proprietor: Edwards Limited, Burgess Hill, Sussex RH15 9TW (GB)
(72) Inventor: SKINNER, Ulrike Martina, Burgess Hill Sussex RH15 9TW (GB); LUCCHETTA, Emiliano, Burgess Hill Sussex RH15 9TW (GB)
(74) Representative: Norton, Ian Andrew
(86) International application number: PCT/GB2017/052528
(87) International publication number: WO 2018/042172

(56) References cited:
- EP-A2- 2 072 831
- EP-A2- 2 557 316
- NL-A- 8 400 164
- US-A1- 2010 272 591
- US-A1- 2014 103 769
- US-A1- 2015 030 475

## Description

### FIELD OF THE INVENTION

The invention relates to a vacuum pump assembly and in particular to the arrangement of a motor in such a vacuum pump assembly.

### BACKGROUND

Turbomolecular pumps are often employed as a component of a vacuum system used to evacuate devices such as scanning electron microscopes (SEMs) and lithography devices.

The performance of scanning electron microscopes is highly susceptible to mechanical vibrations and stray magnetic fields emitted from turbomolecular pumps. In particular, stray fields which vary with time as a result of rotation of the pump may cause issues in operation of apparatus around a vacuum pump. For example, stray fields are known to directly interfere with the electron beam or with the instruments' electrical circuits.

It would be desirable to provide a means to mitigate stray magnetic fields emitted from turbomolecular pumps.

The document US2015/030475A1 discloses a vacuum pump as known in the art. The vacuum pump includes a drive motor comprising a tubular permanent magnet fixed at a radial outer side of the rotor shaft.

The document EP2557316A2 discloses a vacuum pump as known in the art. The vacuum pump includes a drive comprising a tubular motor magnet mounted about a shaft.

The document NL8400164A discloses a vacuum pump as known in the art. The vacuum pump comprises a ring magnet attached to a shaft.

The document US2014/103769A1 discloses a permanent magnet rotor. The permanent magnet rotor comprises a permanent magnet rotor core and a shaft. The rotor core has a central opening which matches the diameter of the shaft such that the rotor core can be mounted on the shaft.

### SUMMARY

A first aspect provides a vacuum pump assembly comprising a motor;
the motor comprising: a motor rotor magnet and a stator; the rotor motor magnet being configured to be rotatable relative to the stator about an axis to drive a vacuum pump mechanism; the motor rotor magnet comprising a solid cylindrical magnet mounted within a recess provided on a vacuum pump shaft and having an axial length of two thirds or less than that of the stator.

The first aspect recognises that a motor rotor magnet in a permanent magnet motor for vacuum pumps, including, for example, turbomolecular vacuum pumps, may be dimensioned such that it is shorter than the length of the motor stator stack. Such a configuration may help to mitigate the electromagnetic stray field emitted by the motor and, in turn, the vacuum pump.

The first aspect recognises that mitigating stray rotating fields emitted by vacuum pumps, such as turbo molecular vacuum pumps, allows for use of such products in, for example, scientific instrument applications sensitive to magnetic fields. Such instruments and applications include, for example, Scanning Electron Microscopes (SEM) and similar.

In a typical stator and rotor motor arrangement in a vacuum pump, the stator stack and motor magnet are of comparable axial lengths. Such an arrangement allows for efficient use of magnetic material. The size of the variable stray magnetic field generated by permanent magnet electrical motors typically used in vacuum pumps can cause problems in some vacuum pump applications, particularly if the design of the motor rotor is not optimised to achieve low variable stray field. That is to say, the ends of the permanent magnet forming part of the rotor emit an electromagnetic field which includes time varying components and could be considered "stray" since that field is not typically well shielded. Indeed, in some typical arrangements, a rotor motor magnet may extend beyond the length of the stator, such that any time varying field can be used to sense properties of motor operation, for example, rotation of the motor may be detected by a Hall sensor. Since a time varying field may stray, or be designed to exist, outside the motor, a time varying electromagnetic field may also stray outside the vacuum pump and be detrimental in some vacuum pump applications.

The first aspect recognises that by decreasing the length of the permanent motor rotor magnet may ensure that the field induced at the end of the rotor magnets substantially remain within the extent of the longer surrounding stator arrangement. In other words, the fields emitted at the end of the rotor magnets are configured such that, for example, the stator may act to collect a portion of the magnetic field generated by the rotor motor magnet, thus reducing stray field. The first aspect recognises that such an arrangement can reduce the stray magnetic field from the magnets which could escape the motor and be measurable outside a vacuum pump assembly.

The first aspect recognises that by providing a rotor motor magnet which is less than two thirds the axial length of the stator, stray field experienced outside the stator and thus the motor and pump in general may be mitigated.

The vacuum pump assembly may comprise a turbo molecular vacuum pump. The vacuum pump assembly comprises a motor. The motor may comprise a permanent magnet rotor motor. The motor may comprise a two pole motor magnet design, a four pole motor magnet design or a multi-pole permanent magnet motor magnet design. The motor comprises a motor rotor magnet and a stator. The stator may comprise a lamination stack, a sintered stator, a powdered iron stator or similar. The stator may further comprise windings. The stator may comprise a lamination stack. The stator may be substantially cylindrical in arrangement and concentric with said rotor motor magnet. The rotor motor magnet is positioned within a volume enclosed by said stator. A gap, for example, an air gap, is typically provided between the rotor motor magnet and the stator, to allow for relative motion between the two. The rotor motor magnet is configured to be rotatable relative to the stator about an axis to drive a vacuum pump mechanism. The motor rotor magnet has an axial length which is shorter than the axial length of the stator. The rotor motor magnet has an axial length of two thirds or less than that of the stator. The rotor motor magnet may have an axial length of two thirds or less than that of the lamination stack. The rotor motor magnet may have an axial length of two thirds or less than that of a powdered iron, sintered material or other similar component.

In some embodiments, the axial length of the motor rotor magnet is selected such that the magnetic field associated with the motor rotor magnet and stator is substantially contained or collected within a volume enclosed by the stator. Accordingly, the length of the motor rotor magnet may be selected such that the stator can "collect" a greater proportion of the associated field. In other words, the stator may effectively shield the area outside the volume enclosed within the stator.

In some embodiments, the motor rotor magnet has a diameter selected, for a stator having a given number of windings, such that the magnetic flux generated by the motor rotor magnet and the stator is substantially identical to an arrangement in which the motor rotor magnet has an axial length comparable to that of the stator. According to some embodiments, the product of the number of stator winding turns and the flux generated by a shorter motor rotor magnet remains substantially constant compared to an arrangement in which the rotor motor magnet and stator are of comparable lengths. It will be appreciated that overall dimensions of a motor within a vacuum pump assembly may be of significance and may not be easily altered. It will also be appreciated that overall performance of a motor within a vacuum pump assembly may be of significance. Accordingly, it may be possible, in some arrangements, to dimension a motor rotor magnet such that overall dimensions of the motor remain constant. In other words, if desirable for a particular vacuum pump assembly, the same stator with the same windings may be used with a shorter motor rotor magnet and achieve the same performance, provided the operational characteristics of the motor magnet are appropriately chosen. That is to say, a magnetic material having a different magnetic strength may be chosen; the diameter of the rotor motor magnet may be chosen; the airgap between the rotor motor magnet and stator may be chosen; and similar. Furthermore, if the operational characteristics, such as the dimensions and/or material and/or shape of the shorter motor rotor magnet are chosen appropriately, overall motor performance may not be significantly altered. Such a configuration may, for example, be achieved by making a motor rotor magnet shorter, but also wider. It will be appreciated that the extent to which the rotor motor magnet may be made wider may be limited by the inner diameter of the stator, the shaft mechanical strength and/or flexibility and similar. A gap must be maintained between the stator and the rotor motor magnet to allow for smooth relative movement between the two.

Provided the same magnetic material is used, the overall volume of the rotor motor magnet may, in some embodiments, remain a constant, compared to a rotor motor magnet having a comparable length to that of the stator. It will be appreciated that the extent to which a motor rotor magnet may be made shorter whilst maintaining performance can be limited by the dimensions of a stator, especially if it is desirable to maintain a stator having particular physical dimensions, and using a particular number of winding turns. It will also be appreciated that operational characteristics of a stator may be adjusted to try to maintain operation of a vacuum pump motor. In particular, the stator material may be changed or the number of winding turns may be changed, in order to achieve a desired performance or a desired physical dimension.

In some embodiments, the motor rotor magnet has an axial length between one third and two thirds of that of the stator. In some embodiments, the motor rotor magnet has an axial length between two fifths and three fifths of that of the stator. In some embodiments, the motor rotor magnet has an axial length in the region of a half of the axial length of the stator. It has been determined experimentally that a benefit may be measured if the rotor motor magnet is approximately 30% shorter than the stator and that benefit may be significant if the rotor motor magnet is approximately 50% shorter than the stator.

In some embodiments, the motor rotor magnet is substantially longitudinally symmetrically located within the stator. Centrally locating the rotor motor magnet may help to mitigate stray field within the vacuum pump assembly. Locating the rotor motor magnet towards one or other end of the stator may aid mitigation of stray field in the region of the other end of the stator.

That cylindrical magnet may have a substantially circular cross section. In some embodiments, the motor rotor magnet may be affixed, by gluing or otherwise, within an appropriate recess or hole of the shaft.

Further particular and preferred aspects are set out in the accompanying independent and dependent claims. Features of the dependent claims may be combined with features of the independent claim as appropriate.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 is a schematic diagram of one example arrangement of some of the main components of a typical vacuum pump not covered by the scope of the claims;
Figure 2a illustrates schematically one possible rotor motor magnet and stator arrangement; and
Figure 2b illustrates schematically one possible rotor motor magnet and stator arrangement according to aspects and embodiments of the present invention.

### DESCRIPTION OF THE EMBODIMENTS

Before discussing the embodiments in any more detail, first an overview will be provided.

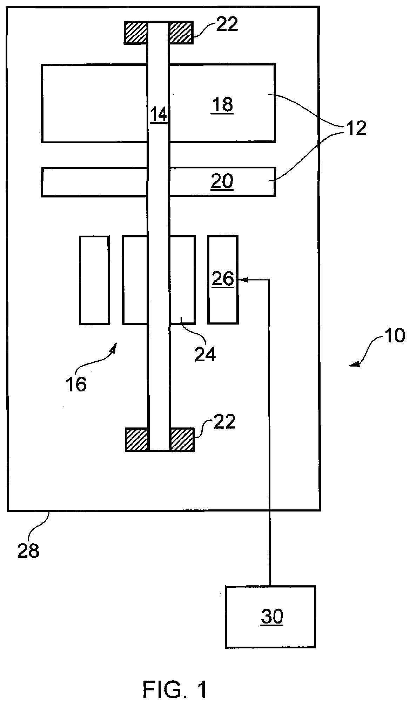

Referring to Figure 1, an example of a vacuum pump 10 is shown. The vacuum pump comprises a vacuum pumping mechanism 12 mounted for rotation by a shaft 14 and a brushless motor 16 for rotating the shaft. The vacuum pumping mechanism 12 comprises a turbo pumping mechanism 18. The turbo pumping mechanism comprises a plurality of pumping stages. The vacuum pumping mechanism further comprises a molecular drag pumping mechanism 20 which includes at least one pumping stage. Shaft 14 is supported for rotation on appropriate bearings 22.

The vacuum pumping mechanism 12 may comprise any one or more types of appropriate turbomolecular pumping mechanism, for example, turbo, Gaede, Siegbahn or Holweck type mechanisms. Figure 1 illustrates an example in which turbo and Siegbahn mechanisms are used.

Vacuum pumping mechanisms require rotation at high speed, typically at speeds of at least 20,000 rpm and generally at speeds of between about 36,000 and 90,000 rpm. Such high speeds are necessary to achieve compression from pressures of about 1x10-10 Torr at an inlet of the pump and 1 Torr at an outlet of the pump. Vacuum pumps are thus considered to be very high speed pumps.

In the example shown in Figure 1, the motor 16 comprises a permanent magnet rotor 24 fixed relative to the shaft 14. The motor further comprises a stator 26 fixed relative to a pump housing 28.

A motor control means 30 is provided and operates to control the rotor and stator coils dependent on a relative position of the rotor 24 and the stator 26 so that the rotor can be rotated relative to the stator to drive the pumping mechanism 12.

It will be appreciated that various vacuum pump motor assembly arrangements are possible. In particular, it will be appreciated that within the specification of a given vacuum pump arrangement, components may take various forms. For example, according to an embodiment not encompassed by the wording of the claims, a rotor motor magnet may comprise a substantially tubular arrangement, such as that shown in Figure 1.

According to an embodiment encompassed by the wording of the claims, the rotor motor magnet comprises a solid permanent magnet housed in an appropriate recess provided in shaft 14.

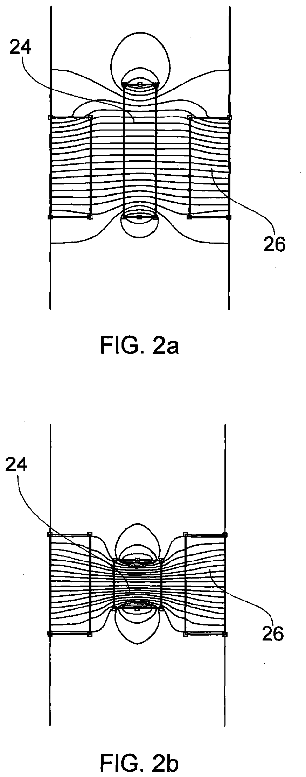

Figure 2a illustrates schematically one possible rotor motor magnet 24 and stator 26 arrangement in a typical vacuum pump assembly such as that illustrated in Figure 1. As shown in Figure 2a, a portion of a vacuum pump assembly is illustrated. In this arrangement, the pump motor comprises a solid rotor motor magnet 24, arranged within a hollow cylindrical stator stack 26. The motor magnet 24 is longer than the lamination stack so that it can trigger hall sensors, provided to feed information about the rotation of the motor to a motor controller. An indication of magnetic flux between the motor magnet and the stator stack are shown schematically in Figure 2a. It can be seen that the top (as shown in Figure 2a) of the motor rotor magnet extends beyond the top of the surrounding stator lamination stack 26. The magnetic field also extends significantly outside the volume enclosed by the stator lamination stack 26. It can also be seen that in the arrangement shown that although the bottom of the motor rotor magnet does not extend significantly outside the volume enclosed by the stator lamination stack, the magnetic field does. As a consequence, stray magnetic fields may be encountered outside the motor and the vacuum pump assembly may be unsuitable for use with scientific or manufacturing equipment which is sensitive to magnetic interference.

Figure 2b illustrates schematically one possible rotor motor magnet 24 and stator 26 arrangement in accordance with some aspects and embodiments of the present invention for use in a typical vacuum pump assembly such as that illustrated in Figure 1. It can be seen that, in order to be used in a vacuum pump assembly similar to that shown in Figure 1 and Figure 2a, the dimensions of the stator lamination stack 26 may be substantially fixed. Nonetheless, Figure 2b illustrates schematically a rotor motor magnet configuration in which stray magnetic field (field outside the volume enclosed by the stator lamination stack 26) may be mitigated.

In the arrangement shown in Figure 2b, the motor rotor magnet is shorter than the stator lamination stack. It can be seen, from the schematic magnetic flux lines, that such an arrangement may help to mitigate stray field. In the arrangement of Figure 2b, it will be appreciated that the dimensions of the motor rotor magnet may be selected such that operation of the motor is maintained, compared to a longer motor rotor magnet. In particular, although the motor rotor magnet 24 is shorter, it is also wider and has a smaller air gap, so that the product of the magnetic flux generated by the motor rotor magnet and the lamination stack winding turns is maintained compared to the arrangement shown in Figure 2a.

### TEST RESULTS

Tests performed at high speed (1500Hz) with a fixed length lamination stack and variable length solid cylindrical rotor motor magnet illustrate that reducing the rotor motor magnet length can achieve a significant reduction in a maximum measured stray field 200mm from a pump assembly, measured in the proximity of the electric motor plane as set out in the following table:

| **ROTOR MAGNET DESIGN** | **Magnet length comparable to stator (average)** | **Reduced length magnet - 71% of stator length** | **Reduced length magnet - 48% of stator length** |
|---|---|---|---|
| Relative stray field at 200 mm from pump [as ratio] (high speed) | **1** | **0.70** | **0.22** |

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

### REFERENCE SIGNS

10 Turbomolecular vacuum pump
12 Vacuum pumping mechanism
14 Shaft
16 Brushless motor
18 Turbo pumping mechanism
20 Molecular drag pumping mechanism
22 Bearings
24 Permanent magnet rotor (of motor)
26 Stator (of motor)
28 Pump housing
30 Motor controller

## Claims

1. A vacuum pump assembly (10) comprising a motor (16);
said motor comprising:
a motor rotor magnet (24) and a stator (26); said motor rotor magnet being configured to be rotatable relative to said stator about an axis to drive a vacuum pump mechanism; said motor rotor magnet (24) comprising a solid cylindrical magnet mounted within a recess provided on a vacuum pump shaft and having an axial length of two thirds or less than that of said stator (26).

2. A vacuum pump assembly according to claim 1, wherein said axial length of said motor rotor magnet is selected such that variable magnetic field associated with rotation of said motor rotor magnet and stator is substantially contained within a volume enclosed by said stator.

3. A vacuum pump assembly according to claim 1 or claim 2, wherein, for a given stator, said motor rotor magnet has a diameter selected such that a product of magnetic flux between said motor rotor magnet and winding turns of said stator is substantially identical to an arrangement in which said motor rotor magnet has an axial length comparable to that of said stator.

4. A vacuum pump assembly according to any preceding claim, wherein said motor rotor magnet has an axial length between one third and two thirds of that of said stator.

5. A vacuum pump assembly according to any preceding claim, wherein said motor rotor magnet has an axial length between two fifths and three fifths of that of said stator.

6. A vacuum pump assembly according to any preceding claim, wherein said motor rotor magnet has an axial length in the region of a half of the axial length of said stator.

7. A vacuum pump assembly according to any preceding claim, wherein said motor rotor magnet is substantially longitudinally symmetrically located within said stator.

## Patentansprüche

1. Vakuumpumpenanordnung (10), umfassend einen Motor (16);
wobei der Motor umfasst:
einen Motorrotormagneten (24) und einen Stator (26); wobei der Motorrotormagnet dazu konfiguriert ist, relativ zu dem Stator um eine Achse drehbar zu sein, um einen Vakuumpumpenmechanismus anzutreiben; wobei der Motorrotormagnet (24) einen massiven zylindrischen Magneten umfasst, der in einer Ausnehmung montiert ist, die an einer Vakuumpumpenwelle vorgesehen ist, und eine axiale Länge von zwei Dritteln jener des Stators (26) oder weniger aufweist.

2. Vakuumpumpenanordnung nach Anspruch 1, wobei die axiale Länge des Motorrotormagneten so gewählt ist, dass ein variables Magnetfeld in Verbindung mit Drehung des Motorrotormagneten und Stators im Wesentlichen in einem von dem Stator umschlossenen Volumen enthalten ist.

3. Vakuumpumpenanordnung nach Anspruch 1 oder Anspruch 2, wobei, für einen gegebenen Stator, der Motorrotormagnet einen Durchmesser aufweist, der so gewählt ist, dass ein Produkt von Magnetfluss zwischen dem Motorrotormagneten und Wicklungswindungen des Stators im Wesentlichen identisch mit einer Anordnung ist, in welcher der Motorrotormagnet eine axiale Länge aufweist, die mit jener des Stators vergleichbar ist.

4. Vakuumpumpenanordnung nach einem der vorhergehenden Ansprüche, wobei der Motorrotormagnet eine axiale Länge zwischen einem Drittel und zwei Dritteln jener des Stators aufweist.

5. Vakuumpumpenanordnung nach einem der vorhergehenden Ansprüche, wobei der Motorrotormagnet eine axiale Länge zwischen zwei Fünfteln und drei Fünfteln jener des Stators aufweist.

6. Vakuumpumpenanordnung nach einem der vorhergehenden Ansprüche, wobei der Motorrotormagnet eine axiale Länge im Bereich einer Hälfte der axialen Länge des Stators aufweist.

7. Vakuumpumpenanordnung nach einem der vorhergehenden Ansprüche, wobei der Motorrotormagnet im Wesentlichen längs symmetrisch innerhalb des Stators angeordnet ist.

## Revendications

1. Ensemble pompe à vide (10) comprenant un moteur (16) ;
ledit moteur comprenant :
un aimant de rotor de moteur (24) et un stator (26) ; ledit aimant de rotor de moteur étant configuré pour être rotatif par rapport audit stator autour d'un axe pour entraîner un mécanisme de pompe à vide ; ledit aimant de rotor de moteur (24) comprenant un aimant cylindrique solide monté au sein d'un évidement ménagé sur un arbre de pompe à vide et ayant une longueur axiale de deux tiers ou moins de celle dudit stator (26).

2. Ensemble pompe à vide selon la revendication 1, dans lequel ladite longueur axiale dudit aimant de rotor de moteur est sélectionnée de sorte qu'un champ magnétique variable associé à une rotation dudit aimant de rotor de moteur et dudit stator est sensiblement contenu au sein d'un volume délimité par ledit stator.

3. Ensemble pompe à vide selon la revendication 1 ou la revendication 2, dans lequel, pour un stator donné, ledit aimant de rotor de moteur possède un diamètre sélectionné de sorte qu'un produit d'un flux magnétique entre ledit aimant de rotor de moteur et des spires d'enroulement dudit stator est sensiblement identique à un agencement dans lequel ledit aimant de rotor de moteur possède une longueur axiale comparable à celle dudit stator.

4. Ensemble pompe à vide selon une quelconque revendication précédente, dans lequel ledit aimant de rotor de moteur possède une longueur axiale d'entre un tiers et deux tiers de celle dudit stator.

5. Ensemble pompe à vide selon une quelconque revendication précédente, dans lequel ledit aimant de rotor de moteur possède une longueur axiale d'entre deux cinquièmes et trois cinquièmes de celle dudit stator.

6. Ensemble pompe à vide selon une quelconque revendication précédente, dans lequel ledit aimant de rotor de moteur possède une longueur axiale dans la région d'une moitié de la longueur axiale dudit stator.

7. Ensemble pompe à vide selon une quelconque revendication précédente, dans lequel ledit aimant de rotor de moteur est situé de manière sensiblement longitudinalement symétrique au sein dudit stator.
